# EUROPÄISCHE PATENTSCHRIFT

(11) **EP 1 229 981 B1**
(45) Veröffentlichungstag und Bekanntmachung des Hinweises auf die Patenterteilung: **19.11.2003**
(21) Anmeldenummer: 00986999.1
(22) Anmeldetag: 20.10.2000
(51) Int. Cl.: B01D 25/00

(54) **FILTERPRESSE MIT EINEM PAKET VON VERTIKAL AUSGERICHTETEN, HORIZONTAL VERSCHIEBBAREN FILTERPLATTEN**
FILTER PRESS WITH A STACK OF VERTICALLY ALIGNED, HORIZONTALLY DISPLACEABLE FILTER PLATES
FILTRE-PRESSE POURVU D'UN ENSEMBLE DE PLAQUES FILTRANTES ORIENTEES VERTICALEMENT ET DEPLA ABLES HORIZONTALEMENT

(30) Priorität: 28.10.1999 DE 19951904
(43) Veröffentlichungstag der Anmeldung: 14.08.2002
(73) Patentinhaber: Outokumpu Oyj, 02201 Espoo (FI)
(72) Erfinder: GRAFEN, Karl, 52146 Würselen (DE)
(74) Vertreter: Bauer, Dirk, Dipl.-Ing. Dipl.-Kfm.
(86) Internationale Anmeldenummer: DE0003687
(87) Internationale Veröffentlichungsnummer: WO01030475

(56) Entgegenhaltungen:
- CH-A- 451 091
- DE-A- 4 325 055
- DE-C- 4 428 963
- DE-C- 19 951 904

## Beschreibung

Die Erfindung betrifft eine Filterpresse mit einem Paket von vertikal ausgerichteten, horizontal verschiebbaren Filterplatten, von denen benachbarte Filterplatten über jeweils ein Verbindungselement miteinander gekoppelt sind und zwischen sich eine Filterkammer einschließen, wobei die Filterplatten in einer Preßstellung des Filterplattenpakets mit Dichträndern aneinander anliegen und, ausgehend von der Preßstellung, durch Horizontalverschiebung mindestens einer Filterplatte nacheinander in eine Entleerungsstellung überführbar sind, in der der horizontale Abstand benachbarter Filterplatten durch die Anlage eines Kopplungselements einer Filterplatte an einer Anschlagfläche des Verbindungselements einer benachbarten Filterplatte begrenzt ist.

Eine derartige Filterpresse ist beispielsweise aus der DE 44 28 963 C1 bekannt. Die Verbindungselemente sind als Hebel ausgebildet, die an seitlich vorstehenden Vorsprüngen der Filterplatten schwenkbar gelagert sind. Die Hebel weisen jeweils zwei Arme auf, nämlich einen bezüglich der Öffnungsrichtung hinteren Arm mit einem Haltehaken, der in Preß- oder Filterstellung hinter den Vorsprung der nächsthinteren Filterplatte eingerastet ist. Des weiteren besitzen die Hebel einen vorderen Arm, der eine Steuerfläche aufweist, die beim Wegbewegen der nächstvorderen Filterplatte, sobald sich diese um eine vorbestimmte Strecke entfernt hat, mit deren Vorsprung zusammenwirkend, eine Schwenkbewegung des Hebels bewirkt, bei der sich dessen Haltehaken vom Vorsprung der nächsthinteren Filterplatte löst. Dabei umrandet die Steuerfläche im hakenförmigen vorderen Arm des Hebels eine Aussparung, in der der Vorsprung der nächstvorderen Filterplatte ständig aufgenommen ist und die an ihrem Grund die Anschlagfläche zur Festlegung, d.h. Begrenzung des Plattenabstandes in der Entleerungsstellung aufweist.

Die Hebel erfüllen somit eine Doppelfunktion, indem sie zum einen, ausgehend von der Preßstellung, die benachbarten Filterplatten gegeneinander verriegeln und somit verhindern, daß treibender Filterkuchen zu einer Entfernung solcher Filterplatten führt, die noch gar nicht entleert werden sollen, und zum anderen als Verbindungselemente wirken, die in der Entleerungsstellung der Filterplatten deren maximalen Abstand zueinander definieren.

Typisch für die bekannte Filterpresse ist die sequentielle Entleerung jeweils nur einer Filterkammer nacheinander, wobei die noch nicht entleerten Filterkammern bis unmittelbar vor dem Entleerungsvorgang miteinander verriegelt sind. Die vorbekannte Filterpresse eignet sich nicht für Entleerungsprinzipien, bei denen eine aus einer Mehrzahl von Filterplatten bestehende Sektion des Pakets gleichzeitig entriegelt werden soll, da die Entriegelung der Filterplatten immer nur sukzessive erfolgen kann.

Aus der DE 43 25 055 A1 ist des weiteren eine Filterpresse bekannt, deren Filterplatten durch Laschen und Zwischenglieder miteinander verkettet sind. Während die Laschen an einer Filterplatte schwenkbar gelagert sind, verbinden die Zwischenglieder je eine der Laschen mit einer benachbarten Filterplatte gelenkig. An den Laschen ist je ein Haken ausgebildet, der hinter Vorsprüngen an den Filterplatten einrastet, wenn die Filterplatten zu einem Paket zusammengeschoben sind. Die Gelenke zwischen den Laschen und den Zwischengliedern sind so angeordnet, daß jeweils beim Auseinanderziehen zweier benachbarter Filterplatten der am Vorsprung der nächstfolgenden Filterplatte eingerastete Haken sich von diesem Vorsprung in dem Maß löst, in dem die zu diesem Haken gehörige Lasche mit dem sie ziehenden Zwischenglied eine Strecklage einnimmt. Auf diese Weise soll verhindert werden, daß sich zwischen den Filterplatten beim Öffnen der Filterpresse vorzeitig Zwischenräume öffnen, in denen sich -der herausdrängende Filterkuchen verklemmen könnte.

Würde bei dieser bekannten Filterpresse das Plattenpaket sektionsweise geöffnet, so ist auch in diesem Fall nicht sichergestellt, daß der Entleerungsabstand zwischen benachbarten Platten in allen Sektionen gleich groß ist, da vor dem Auseinanderziehen des Plattenpakets nach der Entlastung, d.h. Wegnahme des Schließdruckes, eine Entspannung der Dichtränder mit zunehmender Entfernung der Filterplatten von der beweglichen Kopfplatte immer mehr abnimmt.

Der Erfindung liegt die Aufgabe zugrunde, eine Filterpresse so weiterzuentwickeln, daß bei einer sequentiellen Entleerung jeweils vollständiger Sektionen des Plattenpakets beim Entleeren sämtlicher Sektionen stets derselbe Entleerungsabstand benachbarter Filterplatten erreicht werden kann, wobei die Verbindungselemente gleichzeitig eine Verriegelungsfunktion für die Filterplatten der noch nicht zur Entleerung anstehenden Sektionen und eine Verbindungsfunktion zur Einhaltung des Entleerungsabstands aufweisen sollen.

Ausgehend von einer Filterpresse der eingangs beschriebenen Art, wird diese Aufgabe erfindungsgemäß dadurch gelöst, daß die Filterplatten, ausgehend von der Preßstellung, durch Verschiebung einer Filterplatte in eine Entlastungsstellung überführbar sind, in der die Dichtränder der Filterplatten von den zugeordneten Dichtflächen abgelöst sind und in der die Kopplungselemente an einer Sperrfläche der Verriegelungselemente anliegen, die eine weitere horizontale Entfernung benachbarter Filterplatten verhindert, wobei die Anlage der Kopplungselemente an den Sperrflächen durch Entriegelung der zugehörigen Verbindungselemente aufhebbar ist, so daß eine weitere Entfernung benachbarter Filterplatte in die Entleerungsstellung möglich ist.

Nach Beendigung des eigentlichen Filtrationsvorgangs läuft der Öffnungs- und Entleerungsvorgang bei der erfindungsgemäßen Presse somit wie folgt ab:

Zunächst wird durch Verschiebung vorzugsweise der - von der Anpreßplatte her gesehen - ersten Filterplatte und nach und nach aller weiteren Filterplatten eine Entlastung sämtlicher Filterplatten dadurch erzielt, daß die Verbindungselemente nur einen sehr kleinen Abstand benachbarter Filterplatten gestatten, so daß eine Übertragung der Zugkraft von einer Filterplatte auf die nächste stattfindet, sobald ihre Entfernung lediglich einige Millimeter beträgt. Diese geringe Entfernung benachbarter Filterplatten voneinander ist jedoch nötig, um eine Entlastung der in der Preßstellung unter Vorspannung stehenden Dichtränder der Filterplatten zu erzielen. Im entlasteten Zustand stehen die Dichtränder typischerweise einige Millimeter über die Oberfläche der Filterplatte vor, um in der Preßstellung des Pakets infolge elastischer Verformung die benötigte Abdichtung der Filterkammern zu erzielen. Die Überführung sämtlicher Filterplatten von der Preßstellung in die Entlastungsstellung erfolgt sinnvollerweise für das gesamte Plattenpaket in einem Arbeitsschritt, und zwar vorzugsweise unter Verwendung des Schließzylinders, indem dieser um die Summe der einzelnen Entlastungsabstände zurückgefahren wird.

Der Vorteil der erfindungsgemäßen Lösung besteht somit darin, daß mit Hilfe der anmeldungsgemäßen Verbindungselemente eine aktive Entlastung der Dichtränder des gesamten Plattenpakets bewerkstelligt werden kann, bevor die Platten der ersten Sektion auf Entleerungsabstand gebracht werden. Diese aktive Entspannung garantiert, daß die Filterplatten alle denselben Abstand zueinander aufweisen, wie er durch die Verbindungslaschen definiert ist, und daß in dieser Stellung die Dichtränder der Filterplatten vollständig entspannt sind. Nur auf diese Weise kann verhindert werden, daß bei einem durch "Durchwandern" der Entleerungssektion von der ersten bis zur letzten Sektion des Plattenpakets ein gleichbleibender Entleerungsabstand erhalten bleibt.

Bei Vorrichtungen nach dem Stand der Technik wird der Entleerungsabstand der später entleerten Sektionen zunehmend dadurch verkürzt, daß sich die Dichtränder der zugehörigen Platten im Falle fehlender vorheriger aktiver Entspannung aus eigener Kraft immer weniger entspannt haben. Diese Entspannung findet bei Vorrichtungen nach dem Stand der Technik jedoch in dem Moment statt, wo die Platten tatsächlich auf Entleerungsabstand auseinandergezogen werden, wodurch sich, insbesondere bei einer Vielzahl von Filterplatten, durch Addition ein nicht unbeträchtliches Längenmaß ergibt, das den zur Verfügung stehenden Entleerungsabstand vermindert. Hierbei gilt es zu bedenken, daß sich die zu entleerenden Sektionen - mit Ausnahme der ersten Sektion - mitten in dem Filterplattenpaket befinden und somit eine Verschiebung des gesamten Plattenpakets durch Schaffung des erforderlichen Entleerungsabstandes in der Regel unmöglich ist.

Der Kuchenaustrag und die hierfür erforderliche Entfernung der den Filterkuchen begrenzenden Filterplatten auf den Entleerungsabstand erfolgt erst in einem zweiten Schritt, und zwar indem zuvor die Verbindungselemente der Filterplatten derjenigen Sektion entriegelt wurden, die als nächste entleert werden soll.

Nach ihrer Entriegelung wirken die Verbindungselemente wie Elemente mit einer vergrößerten Länge, so daß bei einer erneuten Zugbelastung auf die Filterplatten mit entriegelten Verbindungselementen diese auf den Entleerungsabstand zueinander entfernt werden, wobei die Verbindungselemente diesen Entleerungsabstand definieren und somit auch in der Entleerungsstellung für eine andauernde Verkettung der Filterplatten sorgen.

Vorteilhafterweise werden die Filterplatten einer ersten entleerten Sektion nach der Entriegelung der Verbindungselemente der zweiten, als nächstes zu entleerenden Sektion beim Auseinanderziehen von deren Filterplatten wieder zusammengeschoben, um die Längenerstreckung der Filterpresse klein halten zu können. Bei einem derartigen Entleerungsprinzip "durchläuft" eine Sektion mit Filterplatten im Entleerungsabstand das gesamte Plattenpaket von einem Ende bis zum anderen, so daß dessen Gesamtlänge nach einmaligem Öffnen der ersten Sektion unverändert bleibt und vielmehr der Bereich einer geringeren "Dichte" der Filterplatten das Paket durchwandert.

Gegenüber bekannten Pressen, bei denen das Plattenpaket vor Öffnung der ersten Sektion nicht in eine Entlastungsstellung mit definierten Plattenabständen überführt wird, sondern lediglich der Druck des Schließzylinders aufgehoben und dadurch eine durch die Federeigenschaften der Dichtränder hervorgerufene Selbstentspannung auftritt, liegt der erfindungsgemäße Vorteil darin, daß bei der Entleerung sämtlicher Sektionen nunmehr ein definierter Entleerungsabstand vorliegt. Bei der bekannten Filterpresse tritt - vom Schließzylinder her betrachtet - eine mit zunehmender Entfernung ständig abnehmende Eigenentspannung der Dichtränder auf, was darin begründet liegt, daß die Dichtränder der vom Schließzylinder weiter entfernten Filterplatten bei ihrer Ausdehnung sämtliche davor befindliche Filterplatten in horizontaler Richtung verschieben müßten. Die sich addierenden und einer solchen selbständigen Plattenverschiebung entgegenwirkenden Reibungskräfte der Plattenlagerung im Pressengestell erreichen ab einer bestimmten Plattenanzahl einen Wert, der die Rückstellkraft der komprimierten Dichtränder selbst in der Preßstellung übersteigt, so daß den vom Schließzylinder weiter entfernten Filterplatten trotz der Druckentlastung des Pakets zunächst überhaupt keine Selbstrückstellung eintritt.

Beim Durchwandern der Entleerungssektion durch das Plattenpaket vermindert sich somit deren Breite, d.h. auch der Entleerungsabstand zwischen den Filterplatten, mit zunehmender Entfernung vom Schließzylinder stetig, da die in der ersten Sektion noch im wesentlichen erfolgte Selbstrückstellung der Dichtränder bei den weiter entfernten Sektionen nur noch unvollständig bzw. überhaupt nicht mehr eintritt. Beim Zusammenschieben der Platten einer bereits entleerten Sektion werden diese nicht mit einer derartigen Kraft aufeinandergepreßt, daß die Dichtränder wieder in einen komprimierten Zustand überführt würden, wie er für die Preßstellung, bei der die Schließkraft vom Schließzylinder aufgebracht wird, typisch ist. Somit nimmt der Entleerungsabstand zwischen den Filterplatten der weiter entfernten Sektionen stetig um ein gewisses Maß ab, was sich insbesondere dann als sehr nachteilig auswirkt, wenn mit Hilfsvorrichtungen in den Zwischenraum zwischen benachbarten Filterplatten eingegriffen werden muß, um einen sicheren Kuchenaustrag zu gewährleisten oder eine Filtertuchreinigung vorzunehmen.

Bei der erfindungsgemäßen Filterpresse findet demgegenüber aufgrund der aktiven Zugentlastung des Plattenpakets z.B. mit Hilfe des Schließzylinders die Einstellung einer definierten Entfernung der Filterplatten zueinander statt, wobei aufgrund der Verbindungselemente eine Zugkrafteinleitung in nur eine Filterplatte ausreichend ist. Ausgehend von einem derartigen Entlastungszustand des Filterplattenpakets, ist beim nachfolgenden Entleeren sämtlicher Sektionen derselbe Entleerungsabstand zwischen den Filterplatten sichergestellt.

In einer bevorzugten Ausführungsform sind die Verbindungselemente als Verbindungslaschen ausgebildet, die eine Nut aufweisen, in die das als Kopplungsbolzen ausgebildete Kopplungselement einer benachbarten Filterplatte eingreift.

Die Erfindung weiter ausgestaltend, ist vorgesehen, daß die Verbindungselemente schwenkbar gelagert sind und eine in ihrer Längsrichtung abgewinkelte Nut besitzen, die einen ersten Abschnitt mit der Sperrfläche und einer minimalen Nutbreite aufweist, die der Breite des Kopplungselements zuzüglich des Entlastungsabstands entspricht, und einen zweiten Abschnitt mit der stirnseitig angeordneten Anschlagfläche besitzt.

Wenn die Verbindungselemente jeweils um die Achse eines Kopplungsbolzens schwenkbar sind, erfüllt dieser eine Doppelfunktion, nämlich einerseits als Kopplungselement in der Nut des Verbindungselements der nachfolgenden Filterplatte und zum anderen als Lagerungselement für das Verbindungselement der gerade betrachteten Filterplatte selbst.

Gemäß einer Weiterbildung der erfindungsgemäßen Filterpresse wird vorgeschlagen, daß die Verbindungselemente einen ersten Arm mit der Nut und einen in bezug auf die Schwenkachse dem ersten Arm gegenüberliegenden zweiten Arm aufweisen, der sich oberhalb der Schwenkachse erstreckt und mittels einer Entriegelungseinrichtung niederdrückbar ist, so daß das Kopplungselement in den zweiten Abschnitt der Nut eintreten kann.

Des weiteren ist es besonders vorteilhaft, wenn die Verbindungselemente in zwei zueinander parallelen Ebenen angeordnet sind, wobei benachbarte Verbindungselemente in unterschiedlichen Ebenen liegen. Auf diese Weise wird eine geschuppte Anordnung der Verbindungselemente, wie sie bei der DE 44 28 963 C1 realisiert ist, vermieden.

Schließlich ist noch vorgesehen, daß die Entriegelungseinrichtung ein im Pressengestell horizontal verfahrbarer Wagen ist, der mit einer in vertikale Richtung verstellbaren Kufe versehen ist. Sinnvollerweise ist der Wagen noch mit einer Verschiebeeinrichtung für die Filterplatten versehen, um auf langgestreckte Betätigungselemente, wie sie bei einer stationären Verschiebeeinrichtung u.U. erforderlich wären, zu verzichten.

Die Erfindung wird nachfolgend anhand eines Ausführungsbeispiels einer Filterpresse, das in der Zeichnung dargestellt ist, näher erläutert. Es zeigt:
- Fig. 1: eine Seitenansicht einer Filterpresse mit einer geschlossenen Sektion (I) und einer geöffneten Sektion (II);
- Fig. 2: Verbindungslaschen in der Entlastungsstellung der Filterplatten;
- Fig. 3: wie Fig. 2, jedoch in der entriegelten Stellung der Verbindungslaschen und mit einer auf Entleerungsabstand entfernten Filterplatte.

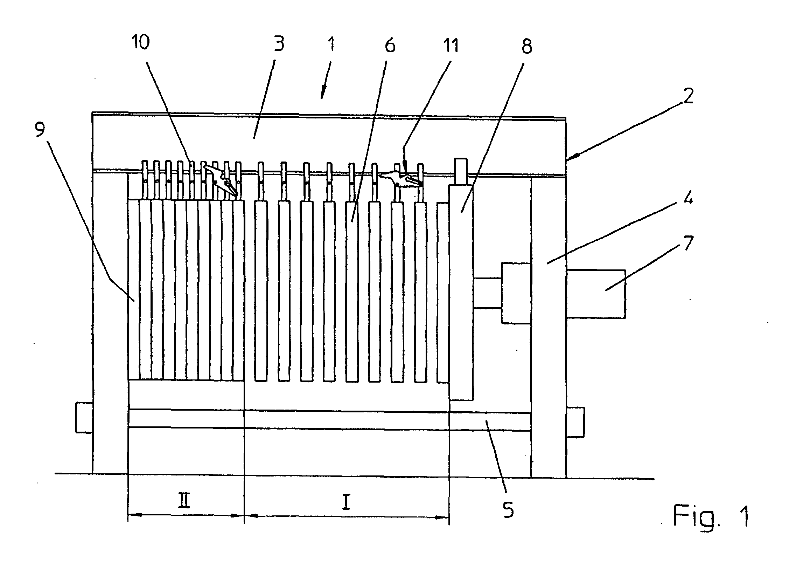

Eine in Fig. 1 dargestellte Filterpresse 1 weist ein Pressengestell 2 auf, das aus zwei Längsträgern 3, einem vorderen Ständer 4, einem hinteren Ständer 4 mit Stützplatte 9 sowie zwei parallel zu den Längsträgern 3 verlaufenden unteren Zugankern 5 besteht.

Zwischen den Ständern 4 und an den Längsträgern 3 hängend und horizontal verschiebbar gelagert ist eine Mehrzahl von Filterplatten 6. Jeweils zwischen zwei dieser Filterplatten 6 befindet sich eine Filterkammer, die im zusammengepreßten Zustand der Filterplatten 6 aufgrund nicht näher dargestellter umlaufender Dichtränder hermetisch gegenüber der Umgebung abgedichtet ist. Mit Hilfe eines hydraulisch betätigbaren Schließzylinders 7 lassen sich die Filterplatten 6 mit Hilfe einer - an den Längsträgern 3 aufgehängten und horizontal verschiebbaren - Anpreßplatte 8 in Richtung des Stützplattenständers zu einem geschlossenen Paket zusammendrücken.

Sämtliche Platten 6 sind im Bereich von darüber befindlichen Halterungen 10 mit Hilfe von Verbindungselementen 11 in Form von Verbindungslaschen miteinander gekoppelt, so daß eine durchgängige Verkettung von der Anpreßplatte 8 bis zu der letzten, der Stützplatte 9 vorgelagerten Filterplatte 6 entsteht.

In Fig. 1 ist die dort exemplarisch gezeigte Verbindungslasche stark vergröbert und nicht maßstäblich dargestellt.

In Fig. 1 ist eine rechte erste Sektion I der Filterplatten 6 in der Entleerungsstellung dargestellt, in die die Platten 6 durch Zurückfahren der Anpreßplatte 8 mittels des Schließzylinders 7, ausgehend von der Preßstellung, überführt wurden. Dagegen befinden sich die Filterplatten 6 der linken Sektion II noch in einer sogenannten Entlastungsstellung, die später genauer erläutert wird.

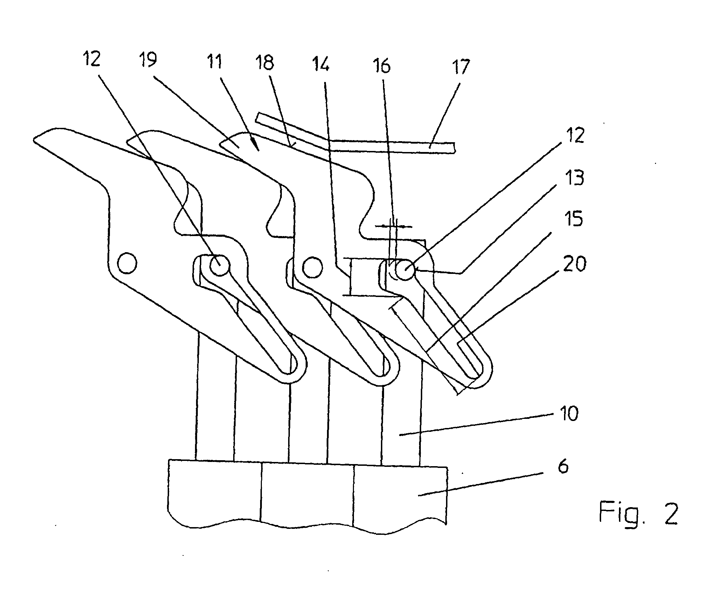

Fig. 2 zeigt drei Filterplatten 6 mit drei im Bereich der Halterungen 10 angeordneten Verbindungselementen 11, wobei sich die Filterplatten 6 bzw. Verbindungselemente 11 in der sogenannten Entlastungsstellung befinden. In dieser Entlastungsstellung liegen die als Kopplungsbolzen ausgebildeten Kopplungselemente 12 an einer Sperrfläche 13 des Verbindungselements 11 an. Die Sperrfläche 13 wird von der Laibung einer Nut gebildet, die einen ersten breiten und kurzen Abschnitt 14 und einen zweiten langen und schmäleren Abschnitt 15 aufweist.

Solange das Filterplattenpaket sich in der Preßstellung befindet, ist deren Kopplungsbolzen 12 etwa in der Mitte (bezogen auf die Breite) des Abschnitts 14 der Nut in dem Verbindungselement 11 angeordnet. Linksseitig liegt er in dieser Stellung nicht an der zugeordneten Nutlaibung an, weil unbedingt sichergestellt werden muß, daß das Filterplattenpaket derart auf Block zusammengepreßt werden kann, so daß die komprimierten Dichtränder eine hinreichende Dichtkraft aufbauen können.

Ausgehend von dieser Preßstellung, wird durch Aufbringung einer Zugkraft auf eine weiter rechtsseitig angeordnete Filterplatte 6 eine Verschiebung des Kopplungsbolzens 12 in dem Abschnitt 14 der Nut bewirkt, solange bis der Kopplungsbolzen 12 rechtsseitig an die Sperrfläche 13 anschlägt, so daß eine weitere Entfernung einer benachbarten Filterplatte 6 nicht mehr möglich ist, sondern die aufgebrachte Zugkraft auf die nächstfolgenden Filterplatten 6 übertragen wird. Auf diese Weise kann, ausgehend von der Anpreßplatte 8, das gesamte Filterplattenpaket derart entspannt werden, daß sämtliche Kopplungsbolzen 12 an den Sperrflächen 13 der zugeordneten Verbindungselemente 11 anliegen. Dabei sind die nicht dargestellten Dichtränder vollständig entspannt bzw. rückgestellt und liegen nicht mehr an den zugeordneten Dichtflächen der Filterplatten 6 an. Der Entspannungsabstand 16 zwischen zwei benachbarten Filterplatten 6 ist so gering, daß dieser bei den Filterplatten 6 in Fig.2 unten nicht dargestellt wurde.

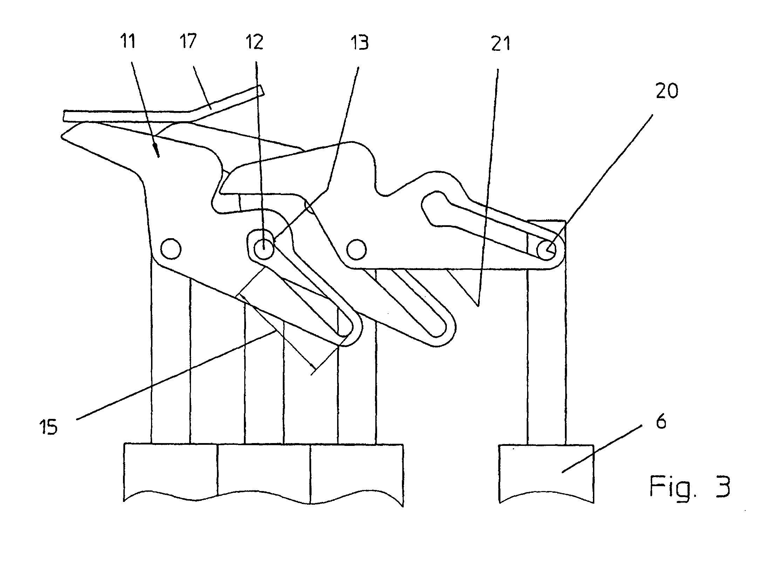

Ausgehend von der in Fig. 2 dargestellten Sperrstellung der Verbindungselemente 11, werden diese mit Hilfe einer Kufe 17 einer nicht näher dargestellten wagenförmigen Entriegelungseinrichtung durch Druck auf eine Schaltfläche 18 eines linken oberen Arms 19 der Verbindungselemente 11 entriegelt. Dabei wird das Verbindungselement 11 um den Kopplungsbolzen 12 der zugeordneten Filterplatte 6 verschwenkt, so daß die in Fig. 3 bei den dort links angeordneten beiden Verbindungselementen 11 gezeigte Entriegelungsposition eingenommen wird. Die Sperrfläche 13 wird dabei an dem Kopplungsbolzen nach oben vorbeigeschoben, wodurch der Kopplungsbolzen 12 somit in den Einlaufbereich des Abschnitts 15 der Nut in dem Verbindungselement 11 gelangt.

Wird nun von einer vorgelagerten Filterplatte 6 bzw. deren Verbindungselement 11 eine Zugkraft auf einen derart angeordneten Kopplungsbolzen 12 ausgeübt, läuft dieser in den Abschnitt 15 der Nut ein und bewirkt dabei eine weitere Drehung des Verbindungselements 11 entgegen dem Uhrzeigersinn. Diese Drehung ist dann abgeschlossen, wenn der Verbindungsbolzen 12 an einer Anschlagfläche 20 am Ende des Abschnitts 15 der Nut angelangt ist. In diesem Moment sind die beiden durch das Verbindungselement gekoppelten Filterplatten 6 auf den maximalen Abstand, d.h. ihren Entleerungsabstand, voneinander entfernt. Eine Kante 21 des Verbindungselements 11 ist in dieser Stellung ungefähr horizontal ausgerichtet.

Ausgehend von dieser Stellung der Filterplatten 6, wird durch eine weitere Verschiebung der am weitesten rechts dargestellten Filterplatte 6 eine Verlagerung auch der weiter links befindlichen Filterplatten 6 voneinander weg bewirkt.

Ausgehend von einer Preßstellung des gesamten Plattenpakets, wird durch aktive Zugentlastung mit Hilfe des Schließzylinders 7 zunächst das gesamte Paket in die Entlastungsstellung gebracht, in der sämtliche Kopplungsbolzen 12 an den zugeordneten Sperrflächen 13 anliegen. Ausgehend von dieser Entlastungsstellung, werden die Verbindungselemente 11 mit Hilfe der Entriegelungseinrichtung sektionsweise entriegelt, weshalb durch erneute Aufbringung einer Zugkraft auf die Anpreßplatte 8 eine Überführung der Filterplatten 6 der entriegelten ersten Sektionen in die Entleerungsstellung möglich ist. In dieser Entleerungsstellung liegen sämtliche Kopplungsbolzen 12 der entriegelten Sektion I an den Anschlagflächen 20 der Verbindungselemente 11.

Nach Entleerung der rechten Sektion I erfolgt eine Entriegelung auch der linken Sektion II und anschließend ein Auseinanderziehen der Filterplatten 6 dieser Sektion II mit Hilfe einer nicht dargestellten Schiebeeinrichtung, wobei gleichzeitig mit dem Auseinanderziehen der Filterplatten 6 der Sektion II - mit Hilfe einer nicht näher dargestellten Verschiebeeinrichtung - die Filterplatten 6 der zuvor entleerten Sektion I wieder zusammengeschoben werden. Bei einer mehr als zwei Sektionen aufweisenden Filterpesse wiederholt sich der Vorgang so lange, bis sämtliche Sektionen entleert sind.

## Patentansprüche

1. Filterpresse (1) mit einem Paket von vertikal ausgerichteten, horizontal verschiebbaren Filterplatten (6), von denen benachbarte Filterplatten (6) über jeweils mindestens ein Verbindungselement (11) miteinander gekoppelt sind und zwischen sich eine Filterkammer einschließen, wobei die Filterplatten (6) in einer Preßstellung des Filterplattenpakets mit Dichträndern aneinander anliegen und, ausgehend von der Preßstellung, durch Horizontalverschiebung mindestens einer Filterplatte (6) nacheinander in eine Entleerungsstellung überführbar sind, in der der horizontale Abstand benachbarter Filterplatten (6) durch die Anlage eines Kopplungselements (12) an einer Filterplatte (6) an eine Anschlagfläche (20) des Verbindungselements (11) einer benachbarten Filterplatte (6) begrenzt ist, **dadurch gekennzeichnet, daß** die Filterplatten (6), ausgehend von der Preßstellung, durch Verschiebung einer Filterplatte (6) in eine Entlastungsstellung überführbar sind, in der die Dichtränder der Filterplatten (6) von den zugeordneten Dichtflächen abgelöst sind und in der die Kopplungselemente (12) an einer Sperrfläche (13) der Verbindungselemente (11) anliegen, die eine weitere horizontale Entfernung benachbarter Filterplatten (6) verhindert, wobei die Anlage der Kopplungselemente (12) an den Sperrflächen (13) durch Entriegelung der zugehörigen Verbindungselemente (11) aufhebbar ist, so daß eine weitere Entfernung benachbarter Filterplatten (6) in die Entleerungsstellung möglich ist.

2. Filterpresse nach Anspruch 1, **dadurch gekennzeichnet, daß** die Verbindungselemente (11) Verbindungslaschen sind, die eine Nut aufweisen, in die das als Kopplungsbolzen ausgebildete Kopplungselement (12) einer benachbarten Filterplatte (6) eingreift.

3. Filterpresse nach Anspruch 2, **dadurch gekennzeichnet, daß** die Verbindungselemente (11) schwenkbar gelagert sind und eine in ihrer Längsrichtung abgewinkelte Nut besitzen, die einen ersten Abschnitt (14) mit der Sperrfläche (13) und einer minimalen Nutbreite aufweist, die der Breite des Kopplungselements (12) zuzüglich eines Entlastungsabstands (16) entspricht und einen zweiten Abschnitt (15) mit der stirnseitig angeordneten Anschlagfläche (20) besitzt.

4. Filterpresse nach Anspruch 3, **dadurch gekennzeichnet, daß** die Verbindungselemente (11) um die Achse eines Kopplungsbolzens schwenkbar sind.

5. Filterpresse nach Anspruch 3 oder 4, **dadurch gekennzeichnet, daß** die Verbindungselemente (11) einen ersten Arm mit der Nut und einen in bezug auf die Schwenkachse dem ersten Arm gegenüberliegenden zweiten Arm (19) aufweisen, der sich oberhalb der Schwenkachse erstreckt und mittels einer Entriegelungseinrichtung niederdrückbar ist, so daß das Kopplungselement (12) in den zweiten Abschnitt (15) der Nut eintreten kann.

6. Filterpresse nach einem der Ansprüche 3 bis 5, **dadurch gekennzeichnet, daß** die Verbindungselemente (11) in zwei zueinander parallelen Ebenen angeordnet sind, wobei benachbarte Verbindungselemente (11) in unterschiedlichen Ebenen liegen.

7. Filterpresse nach einem der Ansprüche 1 bis 6, **dadurch gekennzeichnet, daß** die Entriegelungseinrichtung ein im Pressengestell horizontal verfahrbarer Wagen ist, der mit einer in vertikale Richtung verstellbaren Kufe (17) versehen ist.

## Claims

1. Filter press (1) comprising a packet of vertically oriented, horizontally displaceable filter plates (6), of which adjacent filter plates (6) are coupled to one another by way of at least one respective connecting element (11) and enclose between them a filter chamber, wherein the filter plates (6) rest against one another with sealing edges in a pressing position of the filter plate packet and, starting from the pressing position, can be transferred consecutively by horizontal displacement of at least one filter plate (6) into an emptying position, in which the horizontal spacing between adjacent filter plates (6) is limited by the resting of one coupling element (12) on a filter plate (6) onto a stop face (20) of the connecting element (11) of an adjacent filter plate (6), **characterised in that** the filter plates (6), starting from the pressing position, can be transferred by displacement of one filter plate (6) into a relief position, in which the sealing edges of the filter plates (6) are released from the associated sealing faces and in which the coupling elements (12) rest on a locking face (13) of the connecting elements (11), which prevents a further horizontal separation of adjacent filter plates (6), wherein the resting of the coupling elements (12) on the locking faces (13) can be eliminated by unlocking the associated connecting elements (11), so a further separation of adjacent filter plates (6) into the emptying position is possible.

2. Filter press according to claim 1, **characterised in that** the connecting elements (11) are connecting tabs having a groove, into which the coupling element (12) of an adjacent filter plate (6), which is designed as a coupling bolt, engages.

3. Filter press according to claim 2, **characterised in that** the connecting elements (11) are pivotally mounted and have a groove which is angled in its longitudinal direction and has a first portion (14) with the locking face (13) and a minimal groove width corresponding to the width of the coupling element (12) plus a relief spacing (16) and a second portion (15) with the stop face (20) arranged on the end face.

4. Filter press according to claim 3, **characterised in that** the connecting elements (11) can be pivoted about the axis of a coupling bolt.

5. Filter press according to claim 3 or 4, **characterised in that** the connecting elements (11) have a first arm with the groove and a second arm (19) opposing the first arm with respect to the pivot axis, which second arm extends above the pivot axis and can be pressed down by means of an unlocking device, so that the coupling element (12) can enter the second portion (15) of the groove.

6. Filter press according to any one of claims 3 to 5, **characterised in that** the connecting elements (11) are arranged in two planes which are parallel to each other, adjacent connecting elements (11) lying in different planes.

7. Filter press according to any one of claims 1 to 6, **characterised in that** the unlocking device is a carriage which can be horizontally displaced in the press frame and which is provided with a runner (17) which can be adjusted in the vertical direction.

## Revendications

1. Filtre-presse (1) comprenant un paquet de plaques (6) de filtre dirigées verticalement et coulissant horizontalement, dont des plaques (6) voisines de filtre sont couplées entre elles par, respectivement, au moins un élément (11) de liaison et enferment entre elles une chambre de filtre, les plaques (6) de filtre s'appliquant en une position de pressage du paquet de plaques de filtre les unes contre les autres par des bords d'étanchéité et à partir de la position de pressage pouvant être mise par coulissement horizontal d'au moins une plaque (6) de filtre l'une après l'autre dans une position de vidange, dans laquelle la distance horizontale entre deux plaques (6) de filtre voisines est limitée par la venue en contact d'un élément (12) de couplage sur une plaque (6) de filtre sur une surface (20) de butée de l'élément (11) de liaison d'une plaque (6) de filtre voisine, **caractérisé en ce que** les plaques (6) de filtre, en partant de la position de pressage, peuvent être mises, par coulissement d'une plaque (6) de filtre dans une position de délestage, dans laquelle les bords d'étanchéité des plaques (6), de filtre sont détachés des surfaces d'étanchéité associées et dans laquelle les éléments (12) de couplage s'appliquent à une surface (13) de blocage des éléments (11) de liaison qui empêchent que des plaques (6) de filtre voisines continuent à s'éloigner horizontalement, la venue en contact des éléments (12) de couplage avec les surfaces (13) de blocage étant supprimée par un déverrouillage des éléments (11) associés de liaison, de sorte qu'un éloignement supplémentaire de plaques (6) de filtre voisines pour venir dans la position de vidange est possible.

2. Filtre-presse suivant la revendication 1, **caractérisé en ce que** les éléments (11) de liaison sont des pattes de liaison qui ont une gorge, dans laquelle pénètre l'élément (12) de couplage constitué sous la forme d'un axe de couplage d'une plaque (6) de filtre voisine.

3. Filtre-presse suivant la revendication 2, **caractérisé en ce que** les éléments (11) de liaison sont montés basculants et ont une gorge coudée dans sa direction longitudinale qui a un premier tronçon (14) ayant la surface (13) de blocage et une largeur minimum de gorge qui correspond à la largeur de l'élément (12) de couplage plus une distance (16) de délestage et un deuxième tronçon (15) ayant la surface (20) de butée disposée du côté frontal.

4. Filtre-presse suivant la revendication 3, **caractérisé en ce que** les éléments (11) de liaison sont basculants par rapport à l'axe d'un axe de couplage.

5. Filtre-presse suivant la revendication 3 ou 4, **caractérisé en ce que** les éléments (11) de liaison ont un premier bras ayant la gorge et un deuxième bras (19) opposé, par rapport à l'axe de basculement, au premier bras, qui s'étend au-dessus de l'axe de basculement et qui peut être abaissé au moyen d'un dispositif de déverrouillage, de sorte que l'élément (12) de couplage peut entrer dans le deuxième tronçon (15) de la gorge.

6. Filtre-presse suivant l'une des revendications 3 à 5, **caractérisé en ce que** les éléments (11) de liaison sont disposés en deux plans parallèles entre eux, des éléments (11) de liaison qui sont voisins se trouvant dans des plans différents.

7. Filtre-presse suivant l'une des revendications 1 à 6, **caractérisé en ce que** le dispositif de déverrouillage est un chariot mobile horizontalement dans le bâti de la presse et muni d'un patin (17) réglable dans la direction verticale.
